# EUROPEAN PATENT APPLICATION

(11) **EP 2 116 745 A1**
(43) Date of publication of application: **11.11.2009**
(21) Application number: 08425323.6
(22) Date of filing: 09.05.2008
(51) Int. Cl.: F16H 61/32

(54) **Electric servo-control for a servo-assited gearbox**

(71) Applicant: Magneti Marelli Powertrain S.p.A., 28011 Corbetta (IT)
(72) Inventor: Tornatore, Giovanni, 10080 S. Benigno Canavese (IT); Sola, Cesare, 10087 Valperga (IT)
(74) Representative: Bergadano, Mirko

(57) **Abstract**

An electric servo-control (13) for a servo-assisted gearbox (4) displaying: a control shaft (14) mounted in a movable manner to be axially displaced along a longitudinal axis (15) and to rotate about the longitudinal axis (15); at least one finger (16) which is mechanically coupled to the shaft (14) and is adapted to act on forks (17); a first mechanical transmission (20) which connects the first electric motor (18) to the control shaft (14) for transforming a rotary motion generated by the first electric motor (18) into a displacing motion of the control shaft (14); and a second mechanical transmission (20) which connects the second electric motor (19) to the control shaft (14) for transforming a rotary motion generated by the second electric motor (19) into a rotary motion of the control shaft (14).

## Description

### TECHNICAL FIELD

The present invention relates to an electric servo-control for a servo-assisted gearbox.

### BACKGROUND ART

Servo-controlled transmissions, which are structurally similar to manual transmissions of the traditional type, except for the fact that the clutch pedal and the gear selection lever traditionally operated by the driver are replaced by corresponding electric or hydraulic servo-controls, are increasingly widespread. When using a servo-controlled transmission, the driver only needs to send the order to shift up or down to a transmission control unit and the transmission control unit autonomously shifts gear by operating both on the engine and on the servo-controls associated to clutch and gearbox.

The gear shifting order may be generated either manually, i.e. upon a command imparted by the driver, or automatically, i.e. regardless of the driver's action. When the gear shifting order is generated, the transmission control unit drives the servo-control of the clutch to open the clutch so as to mechanically separate a primary shaft of the gearbox from a drive shaft; at the same time, the transmission control unit acts on the engine control unit to temporarily reduce the drive torque delivered by the engine.

Once the transmission control unit has checked the clutch opening, the transmission control unit drives the gearbox servo-control to disengage the currently engaged gear; when the transmission control unit has checked the gear disengagement, the transmission control unit drives the gearbox servo-control to displace the gearbox control shaft so as to prepare the engagement of the new gear. Once the transmission control unit has checked that the gearbox control shaft has reached the desired position, the transmission control unit drives the gearbox servo-control to engage the new gear.

Finally, when the transmission control unit has checked that the new gear has been engaged, the transmission control unit drives the clutch servo-control to close the clutch so as to make the primary shaft of the gearbox and the drive shaft reciprocally and angularly integral; at the same time, the transmission control unit acts on the engine control unit to restore the drive torque delivered by the engine

Generally, the gearbox servo-control acts on a control shaft of the gearbox to impress to the control shaft both an axial displacement (i.e. along a longitudinal axis) to select the gear range, and a rotation about the longitudinal axis to engage and disengage each gear. Accordingly, the gearbox servo-control comprises a first actuator mechanically coupled to the control shaft to axially displace the control shaft and a second actuator mechanically coupled to the control shaft to rotate the control shaft.

Some examples of electric servo-controls for a servo-assisted gearbox are provided in the following documents: WO07120106A1, DE102006024487A, US2004254040A, DE10142323A1, FR2822214A1 and GB2325967A.

### DISCLOSURE OF INVENTION

It is the object of the present invention to provide an electric servo-control for a servo-assisted gearbox, such an electric servo-control being easy and cost-effective to be manufactured.

According to the present invention, an electric servo-control for a servo-assisted transmission is provided as claimed in the appended claims.

### BRIEF DESCRIPTION OF THE DRAWINGS

The present invention will now be described with reference to the accompanying drawings, which illustrate some non-limitative embodiments thereof, in which:
- figure 1 is a diagrammatic view of a servo-assisted transmission provided with a servo-assisted gearbox which is actuated by an electric servo-control made according to the present invention;
- figure 2 is a diagrammatic perspective view with parts removed for clarity of a portion of the electric servo-control in figure 1; and
- figure 3 is a diagrammatic side view with parts removed for clarity of a variant of the electric servo-control in figure 1.

### PREFERRED EMBODIMENTS OF THE INVENTION

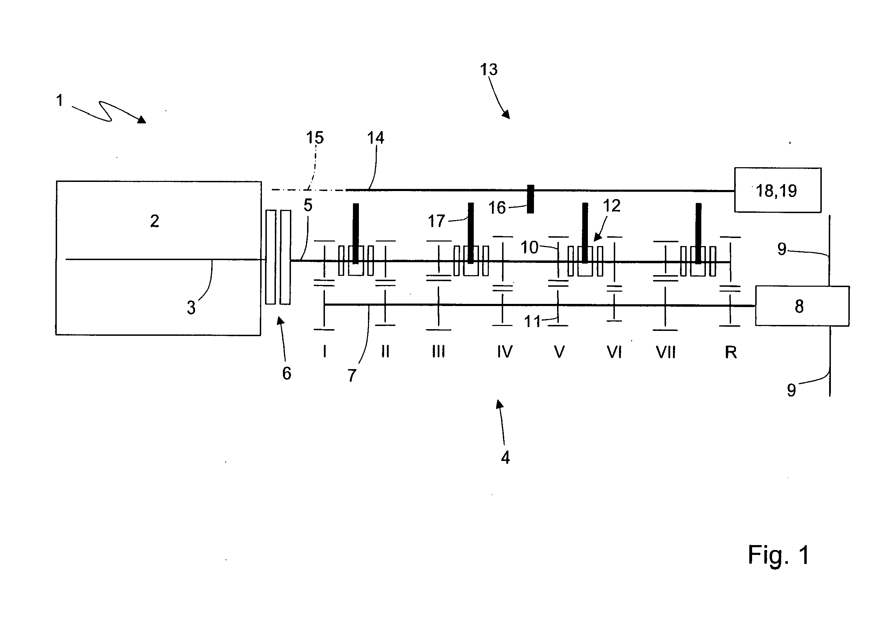

In the figure 1, numeral 1 indicates a whole a servo-assisted transmission for a car (not shown) propelled by an internal combustion engine 2, which is provided with a drive shaft 3.

The servo-assisted transmission 1 comprises a servo-assisted gearbox 4, which is provided with a primary shaft 5, which is connectable to the drive shaft 3 by means of a servo-assisted clutch 6, and a secondary shaft 7, which is connected to a differential 8, which transmits the motion to the drive wheels of the car (not shown) by means of two axle shafts 9.

The servo-assisted gearbox 4 shown in the accompanying figure displays seven forward speeds indicated by Roman numerals (first speed I, second speed II, third speed III, fourth speed IV, fifth speed V, sixth speed VI and seventh speed VII) and one reverse gear (indicated by the letter R). The primary shaft 5 and the secondary shaft 7 are reciprocally and mechanically coupled by means of a plurality of gear pairs, each of which defines a corresponding speed and a comprises a primary gear 10 mounted on the primary shaft 5 and a secondary gear 11 mounted on the secondary shaft 7.

Each primary gear 10 is idly mounted on the primary shaft 5 and always meshes with the corresponding secondary gear 11; instead, each secondary gear 11 is keyed onto the secondary shaft 7 to integrally rotate with the secondary shaft 7 . Furthermore, the servo-assisted gearbox 4 comprises four synchronizers 12, each of which is coaxially mounted to the primary shaft 5, is arranged between two primary gears 10, and is adapted to be actuated to alternatively engage the two corresponding primary gears 10 to the primary shaft 5 (i.e. to alternatively make the two corresponding primary gears 10 angularly integral with the primary shaft 5). In other words, each synchronizer 12 may be displaced either in one direction to engage a primary gear 10 to the primary shaft 5, or may be displaced in the other direction to engage the other primary gear 10 to the primary shaft 5.

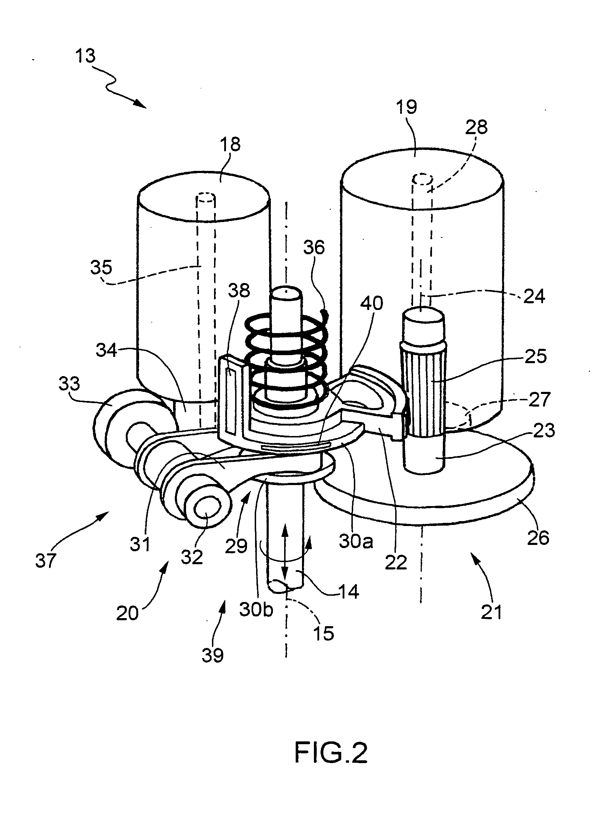

The servo-assisted gearbox 4 comprises an electric servo-control 13, which is adapted to actuate the synchronizers 12 for engaging and disengaging the gears. The electric servo-control 13 comprises a control shaft 14 which is mounted in a movable manner to be axially displaced, i.e. along a longitudinal axis 15 (shown in figure 2), and to rotate about the longitudinal axis 15; the axial displacing movement of the control shaft 14 allows to select the gear range, while the rotary movement of the control shaft 14 allows to engage and disengage the gears. Specifically, the control shaft 14 is provided with a finger 16, which is keyed onto the control shaft and is adapted to act on a series of forks 17, each of which is mechanically connected to a corresponding synchronizer 12 to axially displace the synchronizer 12 so as to engage/disengage the gears associated to the synchronizer 12 . By axially displacing the control shaft 14, the finger 16 is aligned with the various forks 17 and therefore the gear range is selected; on the other hand, by rotating the control shaft 14, the fork 17 is displaced and correctly aligned with the finger 16 and thus a speed is either engaged or disengaged.

The electric servo-control 13 comprises two electric motors 18 and 19, which are separated and independent one from the other and which are mechanically coupled to the control shaft 14 to impress to the control shaft 14 the axial displacing movement and the rotary movement, respectively.

As shown in figure 2, an electric motor 18 controls the displacement of the control shaft 14 along the longitudinal axis 15; a mechanical transmission 20, which connects the electric motor 18 to the control shaft 14 for transforming a rotary motion generated by the electric shaft 18 into a displacing motion of the control shaft 14 is provided. Furthermore, an electric motor 19 controls the rotation of the control shaft 14 about the longitudinal axis 15; a mechanical transmission 21, which is independent from the mechanical transmission 20 and connects the electric motor 19 to the control shaft 14 for transforming a rotary motion generated by the electric shaft 19 into a rotary motion of the control shaft 14, is provided.

The mechanical transmission 21 comprises a toothed sector 22, which is angularly integral with the control shaft 14, and a toothed wheel 23, which is rotated by the electric motor 19 about a rotation axis 24 which is parallel to the longitudinal axis 15 of the control shaft 14 and displays a plurality of teeth 25 which mesh with the toothed sector 22 and display a longitudinal dimension measured along the rotation axis 24 at least equal to the maximum amplitude of the displacement of the control shaft 14 along the longitudinal axis 15. When the electric motor 18 impresses a displacement to the control shaft 14 along the longitudinal axis 15, the teeth 25 of the toothed wheel 23 slide with respect to the toothed sector 22; usually, the electric motor 18 is never activated when the electric motor 19 is activated, and vice versa, thus usually an axial sliding of the teeth 25 of the toothed wheel 23 with respect to the toothed sector 22 does not occur when the teeth 25 of the toothed wheel 23 rotate the toothed sector 22. According to an equivalent embodiment (not shown), the teeth 25 of the toothed wheel 23 display a small longitudinal dimension measured along the rotation axis 24, while the toothed sector 22 which meshes with the teeth 25 of the toothed wheel 23 displays a longitudinal dimension measured along the rotation axis 24 equal to at least half the maximum amplitude of the displacement of the control shaft 14 along the longitudinal axis 15; in other words, in this embodiment equivalent to the embodiment shown in figure 2, the longitudinal dimension measured along the rotation axis 24 is exchanged between the toothed wheel 23 and the toothed sector 22.

Furthermore, the mechanical transmission 21 comprises a toothed wheel 26, which is coaxial and angularly integral with the toothed wheel 23 and is rotated by the electric motor 19 by means of a toothed wheel 27 which is angularly integral with a shaft 28 of the electric motor 19 and meshes with the toothed wheel 26. Specifically, the shaft 28 of the electric motor 19 is parallelly arranged to the longitudinal axis 15 of the control shaft 14 by the side of the toothed wheel 23.

According to the embodiment shown in figure 2, the mechanical transmission comprises a thrust seat 29 arranged on the control shaft 14 and defined by two annular flanges 30, which are carried by the control shaft 14 and are reciprocally parallel and axially spaced. Furthermore, the mechanical transmission 20 comprises a thrust fork 31 which embraces the control shaft 14 inside the thrust seat 29, is rotationally mounted about a rotation axis 31 transversal to the control shaft 14, ad is rotated by the electric motor 18. It is worth noting that the thrust fork 31 which embraces the control shaft 14 inside the thrust seat 29 without being firmly connected to the control shaft 14; therefore, the control shaft 14 is free to rotate with respect to the thrust fork 31 and during the rotation of the control shaft 14 a sliding occurs between the control shaft 14 and the thrust fork 31.

The mechanical transmission 20 comprises an auxiliary shaft 32, which supports the thrust fork 31, rotates about the rotation axis 31 and is rotated by the electric motor 18 by means of a toothed wheel 33, which is angularly integral with the auxiliary shaft 32 and meshes with a toothed wheel 34 which is angularly integral with a shaft 35 of the electric motor 18 and is perpendicular to the toothed wheel 33.

According to a preferred embodiment shown in figure 2, the mechanical transmission 20 comprises a spring 36 which is coaxially arranged to the control shaft 14, biases the control shaft 14 along the longitudinal axis 15 of the control shaft 14, and is pressed between a fixed frame (not shown) and an annular central portion of the toothed sector 22.

According to a preferred embodiment, a contactless position sensor 37 is comprised (e.g. of the LVDT type - Linear Variable Differential Transformer) which determines the axial position of the control shaft 14 along the longitudinal axis 15 and comprises a magnet 38 integral with the control shaft 14 and a reading device (not shown) arranged in a fixed position close to the magnet 38 and adapted to read the position of the magnet 38 . Furthermore, a contactless position sensor 39 is comprised (e.g. of the LVDT type - Linear Variable Differential Transformer) which determines the angular position of the control shaft 14 about the longitudinal axis 15 and comprises a magnet 40 integral with the control shaft 14 and a reading device (not shown) arranged in a fixed position close to the magnet 40 and adapted to read the position of the magnet 40 . It is worth noting that the magnet 38 displays an elongated shape and mainly extends along the longitudinal axis 15, while the magnet 40 displays an elongated shape which mainly extends about the longitudinal axis 15.

According to a preferred embodiment, a common supporting flange 30a is provided, which is integral with the control shaft 14 and supports both the magnet 38 of the position sensor 37, and the magnet 40 of the position sensor 39; preferably, the common supporting flange 30a which carries the two magnets 38 and 40 coincides with one of the two flanges 30 which define the thrust seat 29.

According to a different embodiment (not shown), the magnet 38 of the contactless position sensor 37 which determines the axial position of the control shaft 14 along the longitudinal axis 15 is integral with the auxiliary shaft 32 or with the toothed wheel 34 instead of being integral with the control shaft 14, as in the embodiment shown in figure 2; in this case, the displacement of the magnet 38 is rotary and not linear as in the embodiment shown in figure 2.

According to a further embodiment (not shown), the magnet 40 of the contactless position sensor 39 which reads the angular position of the control shaft 14 about the longitudinal axis 15 is integral with the toothed wheel 23, with the toothed wheel 26, or with the toothed wheel 27, instead of being integral with the control shaft 14 as in the embodiment shown in figure 2.

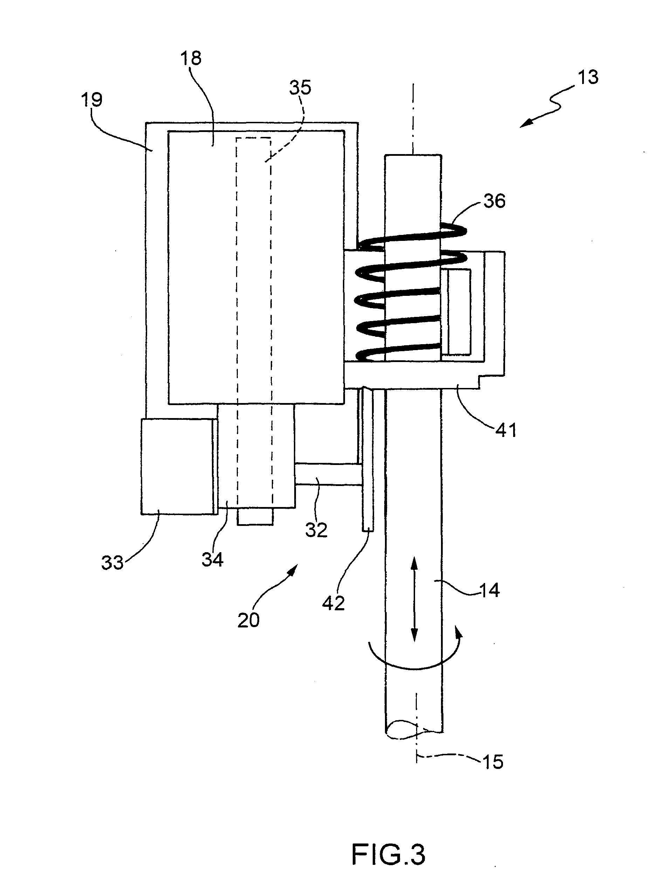

According to the variant shown in figure 3, the mechanical transmission 20 comprises an annular flange 41 which is integral with a control shaft 14 and a cam 42, which thrusts on the flange 41, is rotationally mounted about the rotation axis 31 which is transversal to the longitudinal axis 15 of the control shaft 14, and is rotated by the electric motor 18. In the variant shown in figure 3, the cam 42 is supported by the auxiliary shaft 32 which rotates about the rotation axis 31 and is rotated by the electric motor 18 by means of the toothed wheel 33 which meshes with the toothed wheel 34 which is angularly integral with the shaft 35 of the electric motor 18. In the variant shown in figure 3, the spring 36 biases the control shaft 14 along the longitudinal axis 15 of the control shaft 14 and towards the cam 42, and is pressed between a fixed frame (not shown) and the flange 41 which is integral with the control shaft 14; in this embodiment, the function of the spring 36 is fundamental because it must maintain the flange 41 constantly pressed against the cam 42.

In the embodiment shown in figure 1, the servo-assisted gearbox 4 is a conventional servo-assisted gearbox with a single clutch. According to a different embodiment (not shown), the servo-assisted gearbox 4 is a servo-assisted gearbox with a double clutch and two substantially and reciprocally identical electric servo-controls 13 may be comprised and provided with two corresponding control shafts 14 which are independent one from the other; the control shaft 14 of one electric servo-control 13 actuates the synchronizers of the even speeds, while the control shaft 14 of the other servo-control 13 actuates the synchronizers of the odd speeds.

The above-described electric servo-control 13 displays several advantages, because it is simple, cost-effective and compact, and because displays a high reliability over the course of time. Furthermore, the two electric motors 18 and 19 may be reciprocally identical; in this manner the number of components of the electric servo-control 13 is reduced and the overall cost and the assembling complexity of the electric servo-control 13 is thus reduced.

## Claims

1. An electric servo-control (13) for a servo-assisted gearbox (4); the electric servo-control (13) comprises:
a control shaft (14) mounted in a movable manner to be axially displaced along a longitudinal axis (15) and to rotate about the longitudinal axis (15);
at least one finger (16) which is mechanically coupled to the shaft (14) and is adapted to act on forks (17) which actuate corresponding synchronizers (12) of the servo-assisted gearbox (4);
a first electric motor (18) which controls the displacement of the control shaft (14) along the longitudinal axis (15); and
a second electric motor (19) which is independent from the first electric motor (18) and controls the rotation of the control shaft (14) about the longitudinal axis (15);
the electric servo-control (13) is **characterized in that** it comprises:
a first mechanical transmission (20) which connects the first electric motor (18) to the control shaft (14) for transforming a rotary motion generated by the first electric motor (18) into a displacing motion of the control shaft (14); and
a second mechanical transmission (20) which is independent from the first mechanical transmission (20) and connects the second electric motor (19) to the control shaft (14) for transforming a rotary motion generated by the second electric motor (19) into a rotary motion of the control shaft (14).

2. An electric servo-control (13) according to claim 1, wherein the second mechanical transmission (21) comprises:
a toothed sector (22), which is angularly integral with the control shaft (14); and
the first toothed wheel (23), which is rotated by the second electric motor (19) about a first rotation axis (24) which is parallel to the longitudinal axis (15) of the control shaft (14) and displays a plurality of teeth (25) which mesh with the toothed sector (22);
the first toothed wheel (23) or, alternatively, the toothed sector (22) display a longitudinal dimension measured along the first rotation axis (24) at least equal to the maximum amplitude of the displacement of the control shaft (14) along the longitudinal axis (15).

3. An electric servo-control (13) according to claim 2, wherein the second mechanical transmission (21) comprises:
a second toothed wheel (26) which is coaxial and angularly integral with the first toothed wheel (23) and which is rotated by the second electric motor (19); and
a third toothed wheel (27), which is angularly integral with a shaft (28) of the second electric motor (19) and meshes with the second toothed wheel (26).

4. An electric servo-control (13) according to claim 2 or 3, wherein the shaft (28) of the second electric motor (19) is parallelly arranged to the longitudinal axis (15) of the control shaft (14) by the side of the first toothed wheel (23).

5. An electric servo-control (13) according to any one of the claims from 1 to 4, wherein the first mechanical transmission (20) comprises a thrust element (31; 42), which is rotated by the first electric motor (18) and is mechanically coupled to the control shaft (14) to impress a displacement along the longitudinal axis (15) to the control shaft (14).

6. An electric servo-control (13) according to claim 5, wherein the first mechanical transmission (20) comprises:
a thrust seat (29) arranged on the control shaft (14) and defined between two annular flanges (30), which are carried by the control shaft (14) and are reciprocally parallel and axially spaced; and
a thrust fork (31) which defines the thrust element (31; 42), embraces the control shaft (14) inside the thrust seat (29), is rotationally mounted about a second rotation axis (31) which is transversal to the longitudinal axis (15) of the control shaft (14), and is rotated by the first electric motor (18).

7. An electric servo-control (13) according to claim 5, wherein the first mechanical transmission (20) comprises:
an annular flange (41) which is integral with the control shaft (14); and
a cam (42), which defines the thrust element (31; 42), thrusts on the annular flange (41), is rotationally mounted about a second rotation axis (31) which is transversal to the longitudinal axis (15) of the control shaft (14), and is rotated by the first electric motor (18).

8. An electric servo-control (13) according to claim 5, 6 or 7, wherein the first mechanical transmission (20) comprises an auxiliary shaft (32), which supports the thrust element (31; 42), rotates about the second rotation axis (31) and is rotated by the first electric motor (18).

9. An electric servo-control (13) according to claim 8, wherein the first mechanical transmission (20) comprises:
a fourth toothed wheel (33), which is angularly integral with the auxiliary shaft (32); and
a fifth toothed wheel (34), which meshes with the fourth toothed wheel (33), is angularly integral with a shaft (35) of the first electric motor (18) and is perpendicular to the fourth toothed wheel (33).

10. An electric servo-control (13) according to any one of the claims from 5 to 9, wherein the first mechanical transmission (20) comprises a spring (36) which is coaxially arranged to the control shaft (14) and biases the control shaft (14) along the longitudinal axis (15) of the control shaft (14) and towards the thrust element (31; 42).

11. An electric servo-control (13) according to any one of the claims from 1 to 10 and comprising:
a first contactless position sensor (37) which determines the axial position of the control shaft (14) along the longitudinal axis (15) and comprises a first magnet (38) which is integral and mechanically connected to the control shaft (14) and a first reading device adapted to read the position of the first magnet (38); and
a second contactless position sensor (39) which determines the angular position of the control shaft (14) about the longitudinal axis (15) and comprises a second magnet (40) mechanically connected to the control shaft (14) and a second reading device adapted to read the position of the second magnet (40).

12. An electric servo-control (13) according to claim 11 and comprising a supporting flange (30), which is integral with the control shaft (14) and supports the first magnet (38) of the first position sensor (37) and the second magnet (40) of the second position sensor (39).

13. An electric servo-control (13) according to claim 11, wherein the first magnet (38) of the first position sensor (37) is integral with a rotating component of the first mechanical transmission (20) and the second magnet (40) of the second position sensor (39) is integral with a rotating component of the second mechanical transmission (21).

14. An electric servo-control (13) according to claim 13, wherein the second mechanical transmission (21) comprises:
a toothed sector (22), which is angularly integral with the control shaft (14); and
the first toothed wheel (23), which is rotated by the second electric motor (19) about a first rotation axis (24) which is parallel to the longitudinal axis (15) of the control shaft (14), displays a plurality of teeth (25) which mesh with the toothed sector (22) and supports the second magnet (40) of the second position sensor (39);
the first toothed wheel (23) or, alternatively, the toothed sector (22) displays a longitudinal dimension measured along the first rotation axis (24) at least equal to the maximum amplitude of the displacement of the control shaft (14) along the longitudinal axis (15).

15. An electric servo-control (13) according to claim 13 or 14, wherein the first mechanical transmission (20) comprises:
a thrust seat (29) arranged on the control shaft (14) and defined between two annular flanges (30), which are carried by the control shaft (14) and are reciprocally parallel and axially spaced;
a thrust fork (31) which embraces the control shaft (14) inside the thrust seat (29), is rotationally mounted about a second rotation axis (31) which is transversal to the longitudinal axis (15) of the control shaft (14), and is rotated by the first electric motor (18); and
an auxiliary shaft (32), which supports the thrust fork (31), rotates about the second rotation axis (31), is rotated by the first electric motor (18) and supports the first magnet (38) of the first position sensor (37).
